(19) Europäisches Patentamt / European Patent Office / Office européen des brevets

(11) **EP 2 486 724 B1**

(12) **FASCICULE DE BREVET EUROPEEN**

(45) Date de publication et mention de la délivrance du brevet:
**16.09.2015 Bulletin 2015/38**

(21) Numéro de dépôt: **10810960.4**

(22) Date de dépôt: **11.10.2010**

(51) Int Cl.:
*H04N 5/21* *(2006.01)*      *H04N 5/217* *(2011.01)*
*H04N 5/335* *(2011.01)*      *H04N 5/357* *(2011.01)*

(86) Numéro de dépôt international:
**PCT/EP2010/006187**

(87) Numéro de publication internationale:
**WO 2011/042204 (14.04.2011 Gazette 2011/15)**

(54) **PROCÉDÉ POUR LA RÉDUCTION DU BRUIT DANS LE SIGNAL D'IMAGE D'UN DISPOSITIF PHOTOSENSIBLE**

VERFAHREN ZUR RAUSCHMINDERUNG IM BILDSIGNAL EINES BILDSENSORS

METHOD FOR REDUCING NOISE IN THE IMAGE SIGNAL OF AN IMAGE SENSOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.10.2009 FR 0904847**

(43) Date de publication de la demande:
**15.08.2012 Bulletin 2012/33**

(73) Titulaires:
• **Commissariat à l'Énergie Atomique et aux Énergies Alternatives**
 **75015 Paris (FR)**
• **Trixell S.A.S.**
 **38430 Moirans (FR)**

(72) Inventeurs:
• **BOSSET, Bruno**
 **F-38500 Coublevie (FR)**
• **CRETEUR, Gauthier**
 **F-38380 Entre Deux Guiers (FR)**

(74) Mandataire: **Bordier, Sylvain**
 **Marks & Clerk France**
 **Conseils en Propriete Industrielle**
 **Immeuble Visium**
 **22 avenue Aristide Briand**
 **94117 Arcueil Cedex (FR)**

(56) Documents cités:
**EP-A1- 0 323 924      EP-A2- 0 748 113
EP-A2- 1 874 040      FR-A1- 2 760 585
FR-A1- 2 772 161      US-A- 5 276 508
US-A- 5 946 033**

## Description

La présente invention concerne un procédé de commande d'un dispositif photosensible comportant une matrice de points photosensibles, par exemple réalisés par des techniques de dépôt de matériaux semi-conducteurs. Elle s'applique essentiellement, mais non exclusivement, aux dispositifs photosensibles utilisés pour la détection d'images radiologiques.

Les technologies utilisant des matériaux semi-conducteurs tels que par exemple :

- le silicium amorphe hydrogéné (aSiH), sur des supports isolants en verre,
- le CMOS sur substrat en silicium cristallin,
- les circuits à couplage de charge (CCD) sur substrat en silicium cristallin,

permettent de réaliser des matrices de points photosensibles pouvant produire une image à partir d'un rayonnement visible ou proche du visible. Ces matrices peuvent néanmoins être utilisées dans le cadre de la détection d'images radiologiques. Pour cela, il suffit d'interposer entre le rayonnement X et la matrice un écran scintillateur pour convertir le rayonnement X en rayonnement lumineux dans la bande de longueurs d'onde auxquelles les points photosensibles sont sensibles. Les rayons X peuvent également être directement convertis en charges électriques grâce à un matériau photoconducteur (ex : a-Se, CdTe, PbO, Pbl2, etc.). Dans ce cas, les points photosensibles comportent chacun une capacité de stockage des charges.

Les points photosensibles qui forment ces matrices comprennent généralement un élément photosensible associé à un élément remplissant une fonction d'interrupteur. Le point photosensible est monté entre un conducteur en ligne et un conducteur en colonne. Selon les besoins, le dispositif photosensible comporte alors une pluralité de points photosensibles agencés en matrice ou en barrette.

L'élément photosensible est couramment constitué par une diode, montée en série avec l'élément interrupteur. L'élément interrupteur peut être par exemple une diode dite de commutation dont l'état "fermé" ou "passant" correspond à la polarisation qui la met en conduction directe, et dont l'état "ouvert" ou "bloqué" correspond à sa polarisation en inverse. Les deux diodes sont montées avec des sens de conduction opposés, dans une configuration dite "tête-bêche". Une telle disposition est bien connue, notamment de la demande de brevet français 86 14058 (n° de publication 2 605 166) dans laquelle sont décrits une matrice de points photosensibles du type à deux diodes en configuration "tête-bêche", un procédé de lecture des points photosensibles et une manière de réaliser un tel dispositif photosensible.

Les conducteurs en colonne sont reliés à un circuit de lecture convertissant les charges accumulées dans les éléments photosensibles en signaux et délivrant ces signaux en sortie. Plus particulièrement, le circuit de lecture peut comporter plusieurs étages. Parmi ces étages, un premier étage peut convertir les charges en signaux analogiques ; un deuxième étage peut amplifier ces signaux ; un troisième étage peut multiplexer les signaux de façon à délivrer "en série" et ligne après ligne en sortie du circuit de lecture, un signal multiplexé comportant les signaux représentatifs des charges accumulées dans les éléments photosensibles ; et un quatrième étage peut convertir le signal multiplexé analogique en signal numérique. Comme tout dispositif électronique, le circuit de lecture introduit un bruit électronique venant s'ajouter aux signaux représentatifs des charges accumulées et limitant le rapport signal sur bruit. En l'occurrence, un bruit est généré à chaque étage du circuit de lecture, et éventuellement plus loin dans la chaîne d'acquisition de l'image. Plus généralement, un bruit est introduit à chaque modification ou transformation d'un signal analogique, jusqu'à ce que ce signal soit converti en signal numérique. Le bruit est particulièrement gênant dans la mesure où les signaux issus du premier étage peuvent avoir une amplitude très faible pour certains modes d'acquisition de l'image, en particulier lorsque le temps d'exposition au rayonnement X est faible. Le rapport signal sur bruit est alors très faible, par exemple proche de l'unité et le signal dit utile, c'est-à-dire représentatif des charges accumulées dans les éléments photosensibles, peut être difficile à extraire du signal global, c'est-à-dire du signal comportant à la fois le signal utile et le bruit.

La génération de bruit par la chaîne d'acquisition de l'image peut être limitée par la conception du dispositif photosensible. Cependant, la génération de bruit dépend largement du mode d'utilisation du dispositif photosensible, notamment du temps pendant lequel les points photosensibles sont exposés, de la vitesse de lecture des charges et du gain d'amplification appliqué aux signaux. Ainsi, lors de la conception du dispositif photosensible, un compromis doit être fait entre les différents modes d'utilisation possibles.

Une solution pour diminuer le bruit généré lors du transfert des charges accumulées dans les différents points photosensibles vers un amplificateur de charge est connue de la demande de brevet français publiée sous le numéro FR 2 625 593. Ce brevet décrit un procédé de lecture de points photosensibles passifs où on effectue N fois successivement un transfert de la charge présente sur chaque colonne de la matrice vers des zones de stockage intermédiaires, une duplication de ces charges, un moyennage par colonne des charges dupliquées et une restitution sur les colonnes des charges d'origine. Les moyennes de charges sont ensuite transférées vers l'étage suivant. Les bruits introduits lors de chaque transfert vers les zones de stockage intermédiaire sont généralement décorrélés les uns des autres. Le moyennage permet donc de les annuler partiellement. Cependant, si la solution décrite dans ce brevet permet bien de réduire globalement le bruit introduit par la chaîne d'acquisition de l'image, c'est uniquement au niveau du transfert des charges entre les points photosensibles et l'amplificateur de charge. Le bruit introduit à tous les autres étages de la chaîne d'acquisition de l'image n'est pas réduit. Par ailleurs, la solution décrite dans ce brevet ne s'applique qu'à la lecture de points photosensibles passifs, c'est-à-dire des points photosensibles où les charges sont converties en tensions dans le circuit de lecture et non directement dans les points photosensibles, comme c'est le cas pour des points photosensibles actifs.

Les demandes de brevets EP-A-1874040 et US-A-5946033 pourront aussi être utilement consultées pour prendre connaissance de l'état de l'art antérieur à la présente invention.

Un but de l'invention est notamment de pallier tout ou partie des inconvénients précités. A cet effet, l'invention a pour objet procédé de commande d'un dispositif photosensible comprenant une matrice de pixels organisée en lignes et en colonnes, le procédé comprenant une étape d'acquisition d'une image au cours de laquelle chaque pixel est susceptible d'accumuler une charge et une étape de lecture ligne par ligne de cette image, l'étape de lecture comportant :

- une sous-étape de conversion des charges accumulées par chaque pixel de la ligne considérée en signaux analogiques représentatifs de ces charges, et
- une sous-étape de traitement de ces signaux analogiques, ladite sous-étape comprenant une numérisation desdits signaux analogiques, le procédé étant caractérisé en ce que :

  - la sous-étape de traitement comprend un multiplexage desdits signaux analogiques de la ligne considérée pour fournir en série un signal multiplexé pour chaque sous-étape de traitement,
  - en ce que la sous-étape de traitement est exécutée N fois pour chaque ligne de pixels et pour une même étape d'acquisition, avec N entier supérieur ou égal à deux, et
  - en ce que l'étape de lecture comporte une sous-étape de moyennage des N signaux traités pour chaque pixel afin de fournir une seule image numérique par étape d'acquisition.

Selon une forme particulière de réalisation, les signaux analogiques sont des tensions.

La sous-étape de traitement peut comprendre :

- une conversion des signaux analogiques en signaux numériques ;
- un multiplexage des signaux analogiques ;
- un échantillonnage/blocage des signaux analogiques précédant immédiatement leur multiplexage ;
- une amplification des signaux analogiques ou, le cas échéant, des signaux numériques.

Selon une forme particulière de réalisation, chaque étape d'acquisition d'une image pour laquelle les points photosensibles sont soumis à une exposition, appelée image utile, est précédée d'une étape d'acquisition d'une image pour laquelle les points photosensibles ne sont pas soumis à une exposition, appelée image d'offset, et d'une étape de lecture de cette image d'offset, l'étape de lecture de l'image d'offset étant identique à l'étape de lecture de l'image utile, l'image utile étant corrigée en fonction de l'image d'offset.

Dans une première variante, la sous-étape de traitement est répétée N fois pour une même ligne avant de considérer la ligne suivante.

Dans une deuxième variante, la sous-étape de traitement considère chaque ligne successivement avant d'être répétée.

Selon une première forme de réalisation, les signaux analogiques représentatifs des charges de tous les points photosensibles sont remis à zéro après les N répétitions pour chaque point photosensible de la sous-étape de traitement.

Selon une deuxième forme de réalisation, les signaux analogiques représentatifs des charges de tous les points photosensibles de la ligne considérée sont remis à zéro avant de considérer la ligne suivante.

L'invention a notamment pour avantage qu'elle permet de diminuer le bruit généré sur la quasi-totalité de la chaîne d'acquisition de l'image. En particulier, le bruit généré dès que les charges sont converties en signaux analogiques peut être réduit.

L'invention sera mieux comprise et d'autres avantages apparaîtront à la lecture de la description détaillée d'un mode de réalisation donné à titre d'exemple, description faite en regard de dessins annexés qui représentent :

- la figure 1, un premier exemple de dispositif photosensible passif auquel peut s'appliquer l'invention ;
- la figure 2, un deuxième exemple de dispositif photosensible passif auquel peut s'appliquer l'invention ;
- la figure 3, un exemple de dispositif photosensible actif auquel peut s'appliquer l'invention ;
- la figure 4, des étapes possibles pour le procédé selon l'invention ;
- les figures 5, 6 et 7, des chronogrammes montrant différentes possibilités d'enchaînement des traitements et des remises à zéro des signaux pour les différentes lignes d'une matrice d'un dispositif photosensible.

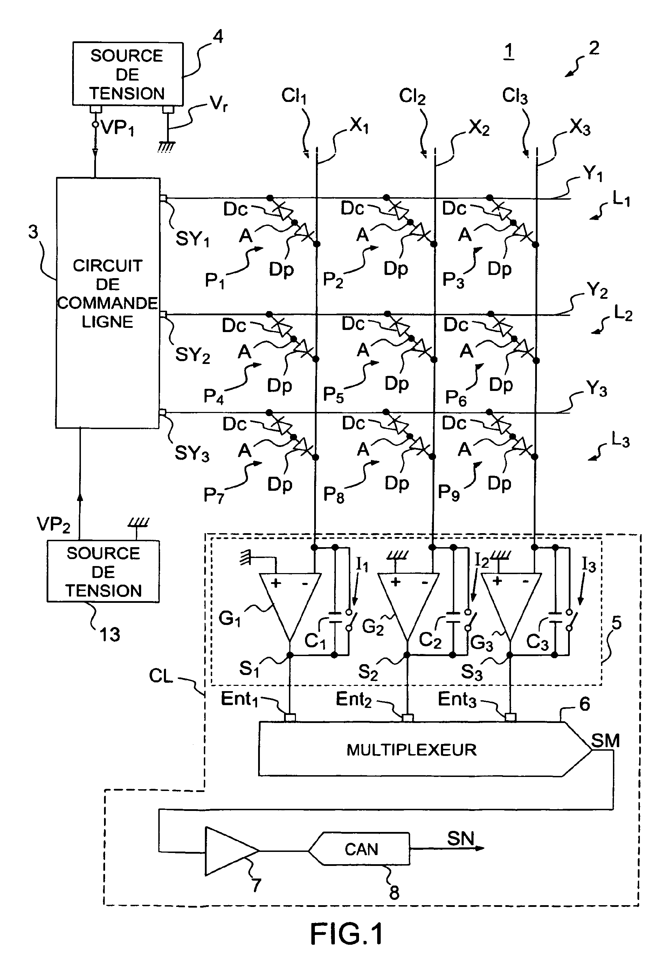

La figure 1 représente un schéma simplifié d'un dispositif photosensible 1 comportant une matrice 2 organisée de façon classique. La matrice 2 comporte des points photosensibles $P_1$ à $P_9$, formés chacun par une diode photosensible Dp et une diode de commutation Dc montées en série suivant une configuration tête-bêche. La matrice comporte des conducteurs en ligne $Y_1$ à $Y_3$

croisés avec des conducteurs en colonne $X_1$ à $X_3$, avec à chaque croisement, un point photosensible $P_1$ à $P_9$ connecté entre un conducteur en ligne $Y_1$ à $Y_3$ et un conducteur en colonne $X_1$ à $X_3$. Les points photosensibles $P_1$ à $P_9$ sont ainsi disposés suivant des lignes $L_1$ à $L_3$ et des colonnes $Cl_1$ à $Cl_3$. Ils sont également appelés pixels.

Dans l'exemple de la figure 1, seulement trois lignes et trois colonnes sont représentées qui définissent neuf points photosensibles $P_1$ à $P_9$, mais une telle matrice peut avoir une capacité beaucoup plus grande, pouvant aller jusqu'à plusieurs millions de points. Il est courant par exemple de réaliser de telles matrices ayant des points photosensibles disposés suivant 3000 lignes et 3000 colonnes (dans une surface de l'ordre de 40 cm x 40 cm), ou bien disposés suivant une unique ligne et plusieurs colonnes pour constituer une barrette de détection, ou encore disposés suivant une unique ligne et une unique colonne pour constituer un unique point photosensible.

Le dispositif photosensible 1 comporte un circuit de commande ligne 3, dont des sorties $SY_1$, $SY_2$ et $SY_3$ sont reliées respectivement aux conducteurs en ligne $Y_1$, $Y_2$ et $Y_3$. Le circuit de commande ligne 3 dispose de différents éléments, non représentés, tels que par exemple, circuit d'horloge, circuits de commutation, registre à décalage, qui lui permettent de réaliser un adressage séquentiel des conducteurs en ligne $Y_1$ à $Y_3$. Le dispositif photosensible 1 comporte en outre une source de tension 4, délivrant au circuit de commande ligne 3 une tension $VP_1$ servant à définir l'amplitude d'impulsions de polarisation appliquées aux conducteurs en ligne $Y_1$, $Y_2$ et $Y_3$ et une source de tension 13, délivrant au circuit de commande ligne 3 une tension $VP_2$ servant à définir l'amplitude d'impulsions de lecture appliquées aux conducteurs en ligne $Y_1$, $Y_2$ et $Y_3$. Ces deux sources de tensions 4 et 13 peuvent éventuellement être confondues.

Dans chaque point photosensible $P_1$ à $P_9$, les deux diodes Dp et Dc sont reliées entre elles soit par leur anode, comme représenté à la figure 1, soit par leur cathode. La cathode de la photodiode Dp est reliée à un conducteur en colonne $X_1$ à $X_3$, et la cathode de la diode de commutation Dc est reliée à un conducteur en ligne $Y_1$ à $Y_3$.

Dans la phase d'acquisition d'image ou de prise d'image, c'est-à-dire pendant la phase d'exposition de la matrice 2 à un signal lumineux dit "utile", les deux diodes Dp et Dc de chaque point photosensible $P_1$ à $P_9$ sont polarisées en inverse. Dans cet état, elles constituent chacune une capacité. Il est à noter que généralement les deux diodes Dp et Dc sont conçues pour que la capacité présentée par la photodiode Dp soit la plus forte, de l'ordre par exemple de 50 fois.

Lors de l'acquisition d'une image, des charges sont engendrées dans la photodiode Dp par l'exposition du point photosensible $P_1$ à $P_9$ auquel elle appartient. Ces charges, dont la quantité est fonction de l'intensité d'exposition, s'accumulent en un point A sur le noeud formé au point de jonction des deux diodes Dp et Dc. La lecture des points photosensibles $P_1$ à $P_9$ s'effectue ligne par ligne, simultanément pour tous les points photosensibles reliés à un même conducteur en ligne $Y_1$ à $Y_3$. A cet effet, le circuit de commande ligne 3 applique à chaque conducteur en ligne $Y_1$ à $Y_3$ adressé, une impulsion dite de lecture d'amplitude $VP_2$. Les conducteurs en ligne qui ne sont pas adressés sont maintenus à un potentiel de référence Vr ou potentiel de repos. Ce potentiel de référence Vr est par exemple la masse. Il peut être le même potentiel que celui qui est appliqué aux conducteurs en colonne $X_1$ à $X_3$.

L'éventuelle accumulation de charges au point A d'un point photosensible $P_1$ à $P_9$ entraîne en ce point une diminution de la tension, c'est-à-dire une diminution de la tension de polarisation inverse de la photodiode Dp. Avec certains modes de fonctionnement, l'application de l'impulsion de lecture à un conducteur en ligne $Y_1$ à $Y_3$ a pour effet de restituer au potentiel du point A de tous les points photosensibles reliés à ce conducteur en ligne, le niveau de polarisation qu'il possédait avant l'exposition au signal lumineux utile. Il en résulte une circulation dans chacun des conducteurs en colonne $X_1$ à $X_3$ d'un courant proportionnel aux charges accumulées au point A correspondant.

Les conducteurs en colonne $X_1$ à $X_3$ sont reliés à un circuit de lecture CL comprenant, dans l'exemple de la figure 1, un circuit intégrateur 5, un circuit multiplexeur 6, un amplificateur vidéo 7 et un convertisseur analogique-numérique 8. Le circuit intégrateur 5 comprend autant d'amplificateurs que de conducteurs en colonne $X_1$ à $X_3$ soit, dans l'exemple de la figure 1, trois amplificateurs $G_1$ à $G_3$. Il comprend en outre une capacité d'intégration $C_1$ à $C_3$ et un élément interrupteur $I_1$ à $I_3$ pour chaque amplificateur $G_1$ à $G_3$. Chaque conducteur en colonne $X_1$ à $X_3$ est relié à une entrée négative " - " d'un amplificateur $G_1$ à $G_3$ monté en intégrateur. Une capacité d'intégration $C_1$ à $C_3$ est montée entre l'entrée négative " - " et une sortie $S_1$ à $S_3$ de chaque amplificateur. La seconde entrée " + " de chaque amplificateur $G_1$ à $G_3$ est reliée à un potentiel qui, dans l'exemple de la figure 1, est le potentiel de référence Vr. Par suite, ce potentiel est imposé à tous les conducteurs en colonne $X_1$ à $X_3$. Chaque amplificateur comporte un élément interrupteur $I_1$ à $I_3$ dit de remise à zéro monté en parallèle avec chaque capacité d'intégration $C_1$ à $C_3$. Les éléments interrupteurs $I_1$ à $I_3$ sont par exemple des transistors du type MOS. Le circuit intégrateur 5 transforme ainsi les charges circulant sur les conducteurs en colonne $X_1$ à $X_3$ en tensions.

Les sorties $S_1$ à $S_3$ des amplificateurs $G_1$ à $G_3$ sont reliées à des entrées $Ent_1$ à $Ent_3$ du circuit multiplexeur 6. Le circuit multiplexeur 6 est par exemple formé d'un registre à décalage à entrées parallèles et sortie série pouvant être du type à couplage de charges, plus communément appelé C.C.D. de l'expression anglo-saxonne "Charged-Coupled Device". Cette disposition classique permet de délivrer "en série" et ligne après ligne (de $L_1$ à $L_3$), en sortie du multiplexeur 6, des tensions qui représentent les charges accumulées aux points A de tous les points photosensibles $P_1$ à $P_9$. Ces tensions sont appelées signal multiplexé SM.

Le signal multiplexé SM peut ensuite être amplifié par l'amplificateur vidéo 7 et converti en un signal numérique SN par un convertisseur analogique-numérique 8.

Il est à noter qu'il est connu aussi, pour remplir la fonction d'interrupteur qui, dans l'exemple de la figure 1, est tenue par la diode de commutation Dc, d'utiliser un transistor. Ce dernier présente par rapport à la diode une plus grande complexité de connexion, mais il offre des avantages dans la qualité de son état "passant".

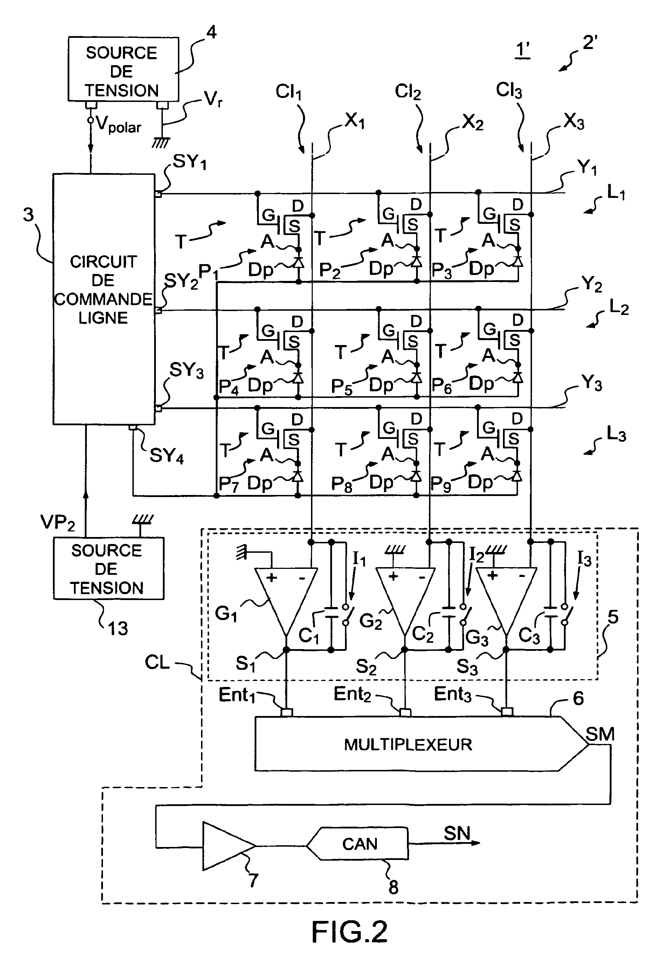

La figure 2 illustre schématiquement un dispositif photosensible 1' qui diffère de celui de la figure 1 principalement en ce qu'il comporte une matrice 2' dans laquelle les diodes de commutation Dc sont remplacées par des transistors T, par exemple réalisés par des techniques de dépôt de films en couches minces. De tels transistors sont connus dans la littérature anglo-saxonne sous le terme de "Thin Film Transistors" (TFT). Les techniques de dépôt de films en couches minces peuvent également être utilisées pour réaliser les autres éléments des matrices 2 et 2' représentées aux figures 1 et 2.

Dans le schéma montré à la figure 2 à titre d'exemple, dans chaque point photosensible $P_1$ à $P_9$, le transistor T est relié par sa source S à la cathode de la photodiode Dp, c'est-à-dire au point A, sa grille G est reliée au conducteur en ligne $Y_1$ à $Y_3$ auquel appartient le point photosensible, et son drain D est relié au conducteur en colonne $X_1$ à $X_3$ auquel appartient le point photosensible $P_1$ à $P_9$. Les anodes de toutes les photodiodes Dp sont reliées à une sortie $SY_4$ du circuit de commande ligne 3. La sortie $SY_4$ délivre une tension dite de polarisation $V_{polar}$, négative par rapport au potentiel de référence Vr ou masse, de l'ordre par exemple de - 5 volts. Cette tension de polarisation $V_{polar}$ sert à constituer la polarisation en inverse des photodiodes Dp. Le circuit de commande ligne 3 reçoit par exemple cette tension de polarisation de la source de tension 4.

Pour mieux comprendre le fonctionnement général des dispositifs représentés aux figures 1 et 2, on peut se reporter aux demandes de brevets français publiées sous les n° FR 2 760 585 et FR 2 605 166.

Les figures 1 et 2 décrivent des exemples de réalisation de dispositifs photosensibles 1 et 1' dans lesquels les points photosensibles $P_1$ à $P_9$ sont dits passifs. L'invention s'applique cependant particulièrement bien à des dispositifs photosensibles dans lesquels les points photosensibles sont dits actifs, c'est-à-dire des points photosensibles dans lesquels les charges accumulées pendant une phase d'acquisition d'une image sont converties en tensions au niveau des pixels et non à l'extérieur de la matrice dans un circuit intégrateur.

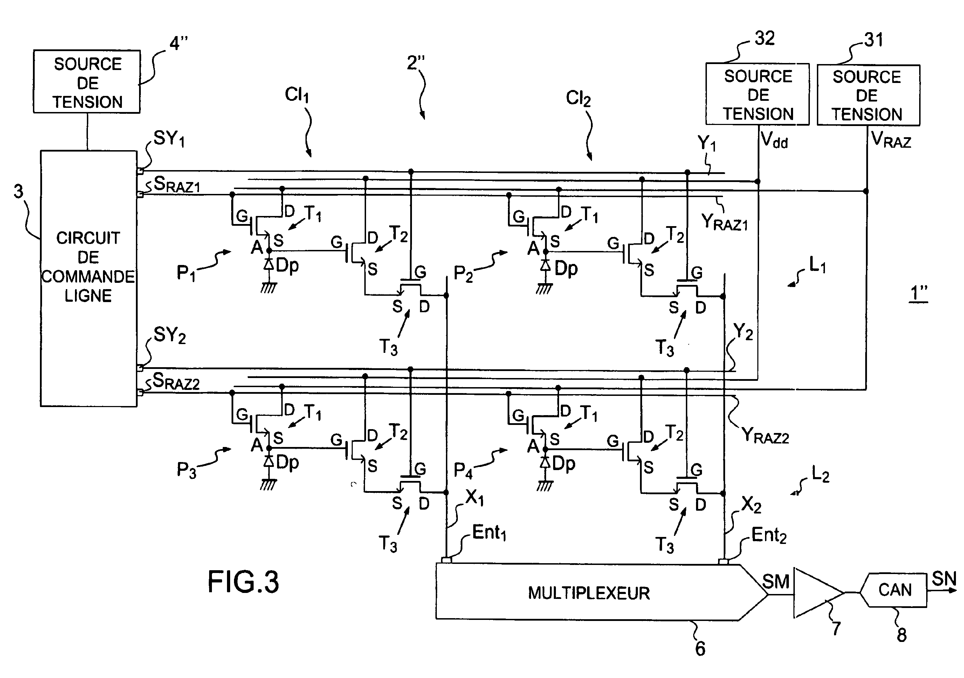

La figure 3 illustre un tel dispositif photosensible 1" comportant une matrice 2" de deux lignes $L_1$ et $L_2$ par deux colonnes $CI_1$ et $CI_2$ de points photosensibles $P_1$ à $P_4$. Le circuit de commande ligne 3 comporte deux sorties $SY_1$ et $SY_2$ reliées respectivement à deux conducteurs en ligne $Y_1$ et $Y_2$. Il comporte en outre deux sorties $S_{RAZ1}$ et $S_{RAZ2}$ reliées respectivement à deux conducteurs de remise à zéro $Y_{RAZ1}$, et $Y_{RAZ2}$. Chaque point photosensible $P_1$ à $P_4$ comporte une photodiode Dp et trois transistors $T_1$, $T_2$ et $T_3$. Le premier transistor $T_1$ de chaque point photosensible $P_1$ à $P_4$ est relié par sa grille G au conducteur de remise à zéro $Y_{RAZ1}$ ou $Y_{RAZ2}$ de la ligne $L_1$ ou $L_2$ à laquelle appartient le point photosensible $P_1$ à $P_4$ considéré, par son drain D à une source de tension 31 soumettant le drain D à un potentiel de remise à zéro $V_{RAZ}$ et par sa source S à la cathode de la photodiode Dp appartenant au point photosensible $P_1$ à $P_4$ considéré. Les anodes de toutes les photodiodes Dp sont reliées à un potentiel commun, par exemple la masse. Le même point A peut être défini entre la source S du transistor $T_1$ et la cathode de la photodiode Dp. Ce point A est de plus relié à la grille G du deuxième transistor $T_2$ du même point photosensible $P_1$ à $P_4$. La source S de ce transistor $T_2$ est reliée à la source S du troisième transistor $T_3$ du même point photosensible $P_1$ à $P_4$ et les drains D de tous les transistors $T_2$ sont reliés à une source de tension 32 soumettant les drains D à un potentiel d'alimentation $V_{dd}$. Le troisième transistor $T_3$ de chaque point photosensible $P_1$ à $P_4$ est de plus relié par sa grille G au conducteur en ligne $Y_1$ ou $Y_2$ de la ligne $L_1$ ou $L_2$ à laquelle appartient le point photosensible $P_1$ à $P_4$ considéré et par son drain D au conducteur en colonne $X_1$ ou $X_2$ de la colonne $CI_1$, ou $CI_2$ à laquelle appartient le point photosensible $P_1$ à $P_4$ considéré.

Les transistors $T_1$ permettent de remettre les points photosensibles $P_1$ à $P_4$ dans leur état d'origine, c'est-à-dire dans l'état qu'ils avaient avant d'être exposés à un rayonnement. Plus particulièrement, les transistors $T_1$ permettent, lorsqu'une impulsion de remise à zéro est envoyée par le circuit de commande ligne 3 sur un conducteur de remise à zéro $Y_{RAZ1}$ ou $Y_{RAZ2}$, de ramener le potentiel du point A de tous les points photosensibles $P_1$ à $P_4$ de la ligne $L_1$ ou $L_2$ considérée au potentiel de départ, en l'occurrence le potentiel de remise à zéro $V_{RAZ}$. Les impulsions de remise à zéro envoyées par le circuit de commande ligne 3 sont par exemple fournies par une source de tension 4". Les transistors $T_2$ permettent soit d'isoler les points A des conducteurs en colonne $X_1$ et $X_2$ lorsque les transistors $T_3$ sont à l'état bloqué, soit de copier (à une constante près) les valeurs des tensions aux points A sur les colonnes $X_1$ et $X_2$ lorsque les transistors $T_3$ sont à l'état passant. Les transistors $T_3$ permettent de sélectionner la ligne $L_1$ ou $L_2$ pour laquelle on souhaite copier les signaux aux points A sur les colonnes $X_1$ et $X_2$.

La lecture des points photosensibles $P_1$ à $P_4$ s'effectue également ligne par ligne. Le circuit de commande ligne applique successivement une impulsion de lecture à chaque conducteur en ligne $Y_1$ et $Y_2$. Les tensions au point A des points photosensibles $P_1$ à $P_4$ ap-

partenant à la ligne $L_1$ ou $L_2$ qui est lue sont alors recopiées sur les conducteurs en colonne $X_1$ et $X_2$ par l'intermédiaire des transistors $T_2$. Les tensions sont recopiées à une tension de décalage près.

Contrairement aux dispositifs photosensibles 1 et 1' des figures 1 et 2, le dispositif photosensible 1 " ne comporte pas de circuit intégrateur, le potentiel développé par les charges accumulées au point A étant copié au niveau de la source S des transistors $T_2$. Les conducteurs en colonnes $X_1$ et $X_2$ sont directement reliés aux entrées $Ent_1$ et $Ent_2$ du multiplexeur 6. Le multiplexeur 6 comprend généralement un étage d'entrée constituée d'un étage échantillonneur-bloqueur. Le multiplexeur 6 délivre en sortie un signal multiplexé SM qui peut également être amplifié par un amplificateur vidéo 7 et numérisé par un convertisseur analogique-numérique 8 afin de fournir un signal numérique SN.

La figure 3 est faite en référence à un dispositif photosensible 1" comportant uniquement deux lignes et deux colonnes de points photosensibles. Bien entendu, l'invention s'applique à des matrices de capacité beaucoup plus importante. En outre, chaque point photosensible peut comporter plus de trois transistors et les tensions d'alimentation $V_{dd}$ et de remise à zéro $V_{RAZ}$ peuvent différer pour chaque point photosensible. L'électronique du pixel peut également être plus complexe et comporter par exemple un amplificateur de charges à la place du transistor $T_2$.

Dans les dispositifs photosensibles 1, 1' et 1 " des figures 1 à 3, on considère que les charges sont accumulées pendant une exposition des points photosensibles $P_1$ à $P_9$ par des photodiodes Dp. Cependant, ces charges peuvent être accumulées par tout élément photosensible, par exemple des phototransistors.

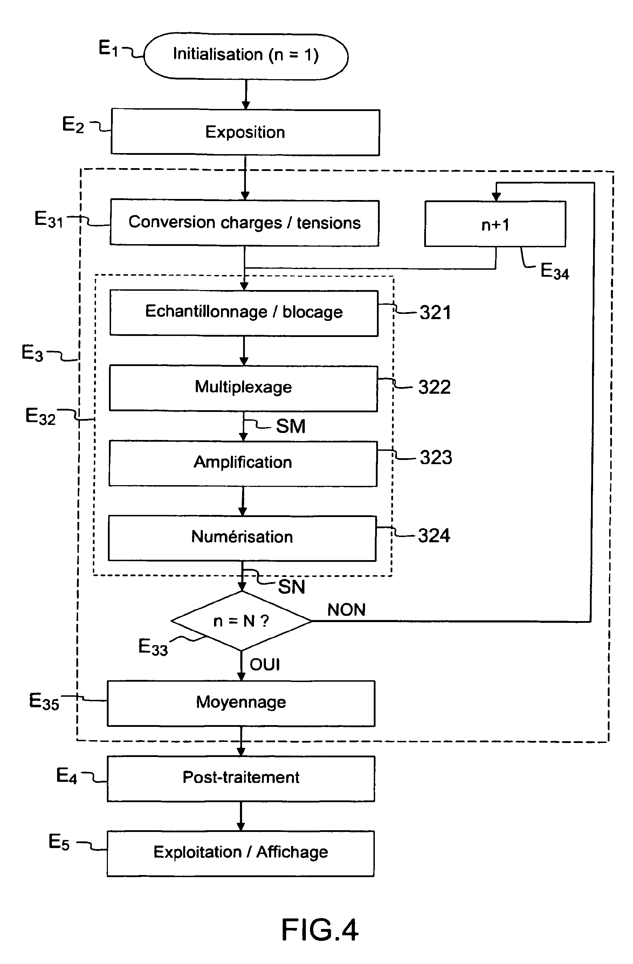

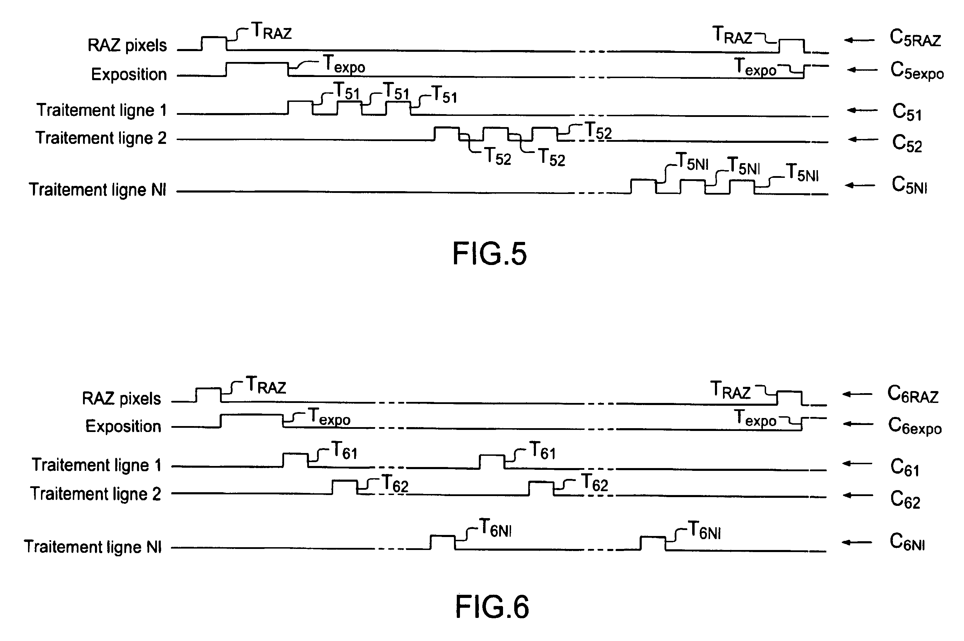

La figure 4 illustre des étapes possibles pour le procédé de commande d'un dispositif photosensible tel que par exemple décrit en référence aux figures 1, 2 et 3. Le procédé de commande selon l'invention peut comprendre une première étape $E_1$, dite étape d'initialisation. Selon une forme particulière de réalisation, adaptée au dispositif photosensible 1" représenté à la figure 3, les points photosensibles $P_1$ à $P_9$ sont remis à zéro durant cette étape $E_1$ ; autrement dit, ils sont remis dans leur état d'origine. Cette forme particulière de réalisation est représentée aux figures 5 et 6 décrites ci-dessous. Pour les dispositifs photosensibles 1 et 1' passifs tels que représentés aux figures 1 et 2, ce ne sont pas les points photosensibles $P_1$ à $P_9$ qui sont remis à zéro, mais les tensions aux bornes des capacités d'intégration $C_1$ à $C_3$ par l'intermédiaire des éléments interrupteurs $I_1$ à $I_3$ respectifs. Le procédé de commande comporte une étape $E_2$ d'acquisition d'une image au cours de laquelle chaque point photosensible $P_1$ à $P_9$ est susceptible d'accumuler une charge et une étape $E_3$ de lecture de cette image. Au cours de l'étape $E_2$, la matrice 2, 2' ou 2" est exposée à un signal lumineux utile, provenant par exemple d'un scintillateur recevant des rayons X ayant traversé une partie du corps d'un patient dont on souhaite obtenir une image radiologique. Généralement, la lecture de l'image est réalisée ligne par ligne, mais elle peut également être réalisée pixel par pixel ou simultanément pour tous les pixels de l'image. L'étape $E_3$ comporte une sous-étape préalable $E_{31}$ de conversion des charges accumulées aux différents points photosensibles de la ligne considérée en signaux analogiques représentatifs de ces charges, une sous-étape $E_{32}$ de traitement de ces signaux analogiques répétée N fois pour chaque point photosensible $P_1$ à $P_9$ avec N un entier supérieur ou égal à deux, chaque sous-étape $E_{32}$ de traitement permettant d'obtenir une ligne d'une image numérique distincte, et une sous-étape $E_{35}$ de moyennage des N signaux traités par point photosensible $P_1$ à $P_9$. Les N signaux traités sont moyennés relativement au point photosensible $P_1$ à $P_9$ considéré afin de fournir en fin de chaîne d'acquisition de l'image, une seule image numérique par étape d'acquisition. La valeur de N peut notamment être déterminée par l'utilisateur en fonction du temps d'exposition des points photosensibles $P_1$ à $P_9$ et du rapport signal à bruit de l'image numérique qu'il souhaite obtenir. La valeur de N peut être bornée par le temps disponible entre deux acquisitions d'images. D'une façon générale, N est supérieur à 2, mais afin de ne pas ralentir excessivement la cadence de lecture, N sera préférentiellement choisi entre 2 et 10.

La sous-étape $E_{31}$ est réalisée dans les dispositifs photosensibles 1 et 1' représentés aux figures 1 et 2 par le circuit intégrateur 5 et, dans le dispositif photosensible 1" représenté à la figure 3, par les transistors $T_2$. Les signaux analogiques représentatifs des charges sont alors des tensions.

La sous-étape $E_{32}$ peut comporter un multiplexage 322 des signaux analogiques afin de fournir en série, pour chaque sous-étape $E_{32}$ de traitement, un signal multiplexé SM. Le multiplexage 322 est par exemple réalisé par le multiplexeur 6 représenté aux figures 1 à 3. Avantageusement, le multiplexeur 6 est précédé dans la chaîne d'acquisition de l'image d'un échantillonneur/bloqueur, non représenté sur ces figures. L'échantillonnage/ blocage 321 précède alors immédiatement dans le procédé selon l'invention le multiplexage 322. Selon une forme particulière de réalisation, la sous-étape $E_{32}$ de traitement comprend une numérisation 324 des signaux analogiques, autrement dit une conversion des signaux analogiques en signaux numériques. Les signaux analogiques peuvent notamment être numérisés après le multiplexage 322 par le convertisseur analogique-numérique 8. Toujours selon une forme particulière de réalisation, la sous-étape $E_{32}$ comprend une amplification 323 des signaux analogiques et/ou numériques. L'amplification 323 concerne par exemple les signaux multiplexés SM. Elle peut être réalisée par l'amplificateur vidéo 7. Bien que la description faite en référence à la sous-étape $E_{32}$ présente un traitement où les signaux analogiques sont d'abord multiplexés, amplifiés, puis numérisés, il faut évidemment comprendre que le multiplexage 322, l'amplification 323 et la numérisation 324 peuvent intervenir dans un ordre différent. Par ailleurs, d'autres traitements peuvent être réalisés sur les signaux analogiques issus des points photosensibles $P_1$ à $P_9$, tels que des amplifications et des filtrages. Toutefois, il est particulièrement avantageux de prévoir une répétition de toute la partie de la chaîne d'acquisition de l'image traitant des signaux analogiques, y compris la numérisation 324, du fait qu'un bruit peut être introduit à chaque étage de la chaine d'acquisition de l'image, en l'occurrence lors de l'échantillonnage/blocage 321, du multiplexage 322, de l'amplification 323 et de la numérisation 324. Il est également possible de prévoir une répétition de toute la chaîne d'acquisition de l'image à partir de la conversion des charges en signaux analogiques et jusqu'aux signaux reçus par un afficheur. Le moyennage des signaux est alors effectué au plus près de l'afficheur dans une partie de la chaîne d'acquisition de l'image comportant généralement au moins un microcontrôleur ou un circuit logique programmable.

Selon l'invention, la sous-étape $E_{32}$ de traitement est répétée N fois après chaque étape $E_2$ d'acquisition d'une image et ce, pour chaque ligne de points photosensibles. Pour chaque étape $E_2$, on obtient donc N signaux multiplexés SM par ligne. Selon une forme particulière de réalisation, la répétition de la sous-étape $E_{32}$ est obtenue par l'intermédiaire d'un compteur de lectures dont la valeur est notée n. Selon cette forme particulière de réalisation, durant l'étape $E_1$ d'initialisation, la valeur n du compteur de lectures est mise à la valeur un. A l'issue de la sous-étape $E_{32}$ de traitement, on peut déterminer dans une sous-étape $E_{33}$ si la valeur n du compteur est égale à la valeur N. Si tel n'est pas le cas, on peut incrémenter d'une unité la valeur n du compteur dans une sous-étape $E_{34}$ et réitérer la sous-étape $E_{32}$ dans son intégralité. Si la valeur n du compteur est égale à la valeur N, on moyenne alors dans une sous-étape $E_{35}$ les N signaux traités obtenus pour chaque point photosensible $P_1$ à $P_9$. Lors d'un traitement ligne par ligne, les N signaux traités obtenus proviennent de chaque point photosensible d'une même ligne, par exemple $P_1$ à $P_3$. L'étape $E_3$ est répétée pour chaque ligne (pixels $P_4$ à $P_6$, puis pixels $P_7$ à $P_9$). Le moyennage est par exemple un moyennage arithmétique ou quadratique. Il peut également être pondéré en fonction de la valeur n du compteur de lectures ou d'une amplitude de certains signaux. Il est également possible d'éliminer des valeurs aberrantes de signaux, par exemple situées en dehors de fourchettes prédéterminées. Le moyennage peut notamment être effectué sur les N signaux multiplexés et numérisés. Le signal obtenu par la sous-étape $E_{35}$ de moyennage peut alors être exploité par le reste de la chaîne d'acquisition d'une image de la même façon que s'il s'agissait d'un signal issu d'une seule sous-étape $E_{32}$ de traitement.

L'invention permet de réduire les bruits électroniques introduits dans la sous-étape $E_{32}$ de traitement des signaux analogiques dans la mesure où ces bruits sont au moins partiellement décorrélés les uns des autres entre deux traitements et s'annulent donc partiellement. Plus particulièrement, pour des bruits complètement décorrélés, le bruit global pour N sous-étapes $E_{32}$ de traitement est divisé par la racine carrée de N $\left( \sqrt{N} \right)$ par rapport au bruit qui serait introduit pour une seule sous-étape $E_{32}$. En conséquence, on s'aperçoit que pour deux sous-étapes $E_{32}$ de traitement (N = 2), le bruit est déjà réduit de plus de 40 pourcents. Pour un traitement en temps réel, les sous-étapes $E_{32}$ de traitement ne sont pas répétées plus d'un certain nombre de fois pour ne pas ralentir la cadence de lecture. Les sous-étapes $E_{32}$ sont par exemple répétées de 2 à 10 fois pour chaque ligne de points photosensibles ($2 \leq N \leq 10$).

A l'issue de l'étape $E_3$ de lecture, le signal peut éventuellement subir un post-traitement dans une étape $E_4$ et être exploité et/ou affiché dans une étape $E_5$. Le post-traitement peut par exemple concerner une correction de gain pour chaque point photosensible $P_1$ à $P_9$. Une correction de gain (pixel à pixel) est nécessaire dans la mesure où l'évolution du rapport entre les charges accumulées en un point photosensible $P_1$ à $P_9$ et la tension intégrée pour ces charges ne correspond pas au même coefficient de linéarité pour tous les points photosensibles $P_1$ à $P_9$.

Selon une forme particulière de réalisation, chaque étape $E_2$ d'acquisition d'une image utile, c'est-à-dire d'une image pour laquelle les points photosensibles $P_1$ à $P_9$ ont été soumis à une exposition, est précédée d'une étape d'acquisition d'une image d'offset, c'est-à-dire d'une image pour laquelle les points photosensibles $P_1$ à $P_9$ n'ont pas été soumis à une exposition, et d'une étape de lecture de cette image d'offset. Lors de l'étape $E_4$ de post-traitement, il est alors possible de corriger l'image utile en fonction de l'image d'offset. Une correction d'offset est généralement nécessaire dans la mesure où les composants semi-conducteurs utilisés dans les dispositifs photosensibles 1, 1' et 1 ", en particulier les photodiodes Dp, les diodes de commutation Dc et les transistors $T_1$, $T_2$ et $T_3$ ne sont pas tous strictement identiques. L'image utile englobant l'image d'offset, la correction de l'image utile en fonction de l'image d'offset peut être effectuée par une soustraction pixel par pixel entre l'image utile et l'image d'offset. Dans le cas où il n'y a pas de remise à zéro de l'étage de conversion charges/tension, la correction d'offset consiste en un double échantillonnage corrélé.

Toujours selon une forme particulière de réalisation, l'étape de lecture de l'image d'offset est identique à l'étape $E_3$ de lecture de l'image utile. En d'autres termes, les signaux analogiques représentatifs des charges accumulées dans les points photosensibles $P_1$ à $P_9$ en l'absence d'exposition et appelés signaux d'offset sont traités N fois puis moyennés pixel par pixel afin de diminuer le bruit généré par la sous-étape $E_{32}$ de traitement de la même manière que pour les signaux utiles.

Selon une forme particulière de réalisation, le procédé de commande selon l'invention comporte plusieurs enchaînements des sous-étapes $E_{32}$ de traitement et $E_{35}$ de moyennage, les sous-étapes $E_{32}$ de traitement pouvant différer selon l'enchaînement. A titre d'exemple, une première sous-étape $E_{32}$ de traitement peut comporter un échantillonnage/blocage 321 et un multiplexage 322 des signaux analogiques et une deuxième sous-étape $E_{32}$ peut comporter une amplification 323 et une numérisation 324 du signal multiplexé SM, chaque sous-étape $E_{32}$ étant répétée N fois avant que les N signaux qui en sont issus soient respectivement moyennés dans une première et dans une deuxième sous-étape de moyennage $E_{35}$.

Les figures 5 et 6 illustrent, par des chronogrammes, deux possibilités différentes d'enchaînement des traitements des signaux analogiques selon les lignes de la matrice 2, 2' ou 2". Pour la suite de la description, on considère des matrices de points photosensibles organisées en Nl lignes par Nc colonnes. Sur les chronogrammes, on considère un état haut comme un état actif et un état bas comme un état passif.

La figure 5 illustre une première possibilité où la sous-étape $E_{32}$ de traitement est répétée N fois pour une même ligne avant de considérer la ligne suivante. Plus précisément, selon cette possibilité, on effectue un moyennage, ligne par ligne, de N signaux provenant des pixels d'une même ligne. Autrement dit, si l'on considère une ligne de pixels donnée, chaque circuit de lecture correspondant à une colonne (on parle également de pied de colonne) collecte N signaux successifs provenant du pixel situé sur ladite ligne. On sait que, lors de la lecture d'un pixel, le potentiel lu évolue vers une valeur asymptotique, cette dernière correspondant à la charge collectée par le pixel. En collectant N échantillons successifs de ce potentiel, au moyen de l'échantillonneur bloqueur 321, chaque échantillon successivement collecté se rapproche de la valeur asymptotique. Ainsi, pour chaque pixel de la ligne considérée, la moyenne de ces N échantillons est plus représentative de la charge collectée dans le pixel, cela en comparaison avec le cas où l'on ne procède aux N lectures que par le biais de N acquisitions complètes (sur plusieurs lignes), ces N acquisitions étant réalisées sans remise à zéro des points photosensibles. Dans cet exemple, on a choisi N égal à trois mais toute autre valeur entière supérieure ou égale à deux est bien entendu possible. Un premier chronogramme $C_{5RAZ}$ présente les périodes $T_{RAZ}$ de remise à zéro des points photosensibles. Relativement à la figure 3, le chronogramme $C_{5RAZ}$ illustre une forme possible de signal pour les conducteurs de remise à zéro $Y_{RAZ1}$ et $Y_{RAZ2}$. Un deuxième chronogramme $C_{5expo}$ présente la période $T_{expo}$ de l'étape $E_2$ d'acquisition d'une image, c'est-à-dire la période pendant laquelle les points photosensibles sont soumis à un rayonnement. Trois autres chronogrammes $C_{51}$, $C_{52}$ et $C_{5NI}$ représentent respectivement les périodes $T_{51}$, $T_{52}$ et $T_{5NI}$ pendant lesquelles les signaux de la première, de la deuxième et de la dernière ligne sont traités par la

sous-étape $E_{32}$. Relativement à la figure 3, les chronogrammes $C_{51}$ et $C_{52}$ illustrent les signaux pouvant être appliqués sur les conducteurs en ligne $Y_1$ et $Y_2$, respectivement. Les chronogrammes $C_{5RAZ}$, $C_{5expo}$, $C_{51}$, $C_{52}$ et $C_{5NI}$ montrent que :

- chaque période $T_{expo}$ est précédée d'une période $T_{RAZ}$ ;
- à l'issue de la période $T_{expo}$, les Nc signaux de la première ligne sont traités trois fois ;
- après le dernier traitement des signaux de la première ligne, les Nc signaux de la deuxième ligne sont à leur tour traités trois fois ;
- et ainsi de suite jusqu'à la dernière ligne où les signaux correspondants sont traités trois fois.

La sous-étape $E_{35}$ et les étapes $E_4$ et $E_5$ peuvent ensuite être réalisées. Une nouvelle étape $E_2$ d'acquisition d'une image peut être effectuée dès la fin de la dernière itération de la sous-étape $E_{32}$ de traitement de la dernière ligne.

Bien entendu, pour un dispositif photosensible passif, les charges des points photosensibles appartenant à la ligne dont les signaux vont être traités doivent être converties avant la première sous-étape $E_{32}$ de traitement, conformément à l'étape $E_3$ de lecture décrite en référence à la figure 4.

La figure 6 illustre une deuxième possibilité d'enchaînement des traitements des signaux analogiques où la sous-étape $E_{32}$ de traitement considère chaque ligne successivement avant d'être répétée. Dans cet exemple, on a choisi N égal à deux. Dans la figure 6, les chronogrammes $C_{6RAZ}$ de remise à zéro des points photosensibles et $C_{6expo}$ d'exposition des points photosensibles sont respectivement identiques aux chronogrammes $C_{5RAZ}$ et $C_{5expo}$. Trois autres chronogrammes $C_{61}$, $C_{62}$ et $C_{6NI}$ représentent respectivement les périodes $T_{61}$, $T_{62}$ et $T_{6NI}$ pendant lesquelles les signaux de la première, de la deuxième et de la dernière ligne sont traités par la sous-étape $E_{32}$. A la différence des chronogrammes de la figure 5, les chronogrammes $C_{6RAZ}$, $C_{6expo}$, $C_{61}$, $C_{62}$ et $C_{6NI}$ montrent que, à l'issue de la période d'exposition $T_{expo}$, on traite une première fois les Nc signaux de la première ligne, puis les Nc signaux de la deuxième ligne, et ainsi de suite jusqu'à la dernière ligne où les signaux correspondants sont également traités une première fois. On traite ensuite une deuxième fois la première ligne, la deuxième ligne et les lignes suivantes jusqu'à la dernière ligne. Après les N itérations de la sous-étape $E_{32}$ de traitement de la dernière ligne, les étapes $E_{35}$ de moyennage, puis l'étape $E_4$ de post-traitement et l'étape $E_5$ d'exploitation et/ou d'affichage peuvent être réalisées. Une nouvelle étape $E_2$ d'acquisition d'une image peut également être effectuée.

Selon une forme particulière de réalisation, représentée aux figures 5 et 6, les signaux analogiques représentatifs des charges de tous les points photosensibles sont remis à zéro après les N répétitions pour chaque point photosensible de la sous-étape $E_{32}$ de traitement. Par conséquent, en considérant deux images utiles successives, la remise à zéro des signaux analogiques suivant les N répétitions de la sous-étape $E_{32}$ pour l'obtention de la première image correspond à la remise à zéro précédant l'étape $E_2$ d'acquisition de l'image suivante.

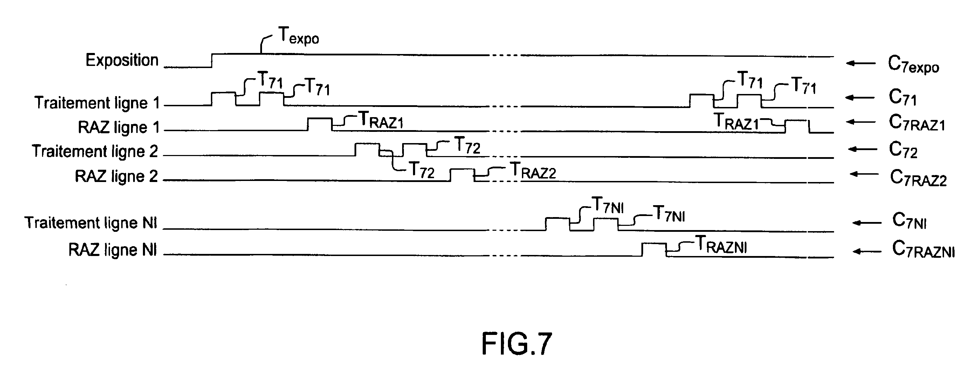

La figure 7 illustre, par des chronogrammes, une autre forme particulière de réalisation du procédé selon l'invention avec N égal à deux. Un premier chronogramme $C_{7expo}$ présente la période $T_{expo}$ de l'étape $E_2$ d'acquisition d'une image. Trois chronogrammes $C_{71}$, $C_{72}$ et $C_{7NI}$ représentent respectivement les périodes $T_{71}$, $T_{72}$ et $T_{7NI}$ pendant lesquelles les signaux de la première, de la deuxième et de la dernière ligne sont traités par la sous-étape $E_{32}$. Trois autres chronogrammes $C_{7RAZ1}$, $C_{7RAZ2}$ et $C_{7RAZNI}$ illustrent les périodes $T_{RAZ1}$, $T_{RAZ2}$ et $T_{RAZNI}$ pendant lesquelles les signaux analogiques de la première, de la deuxième et de la dernière ligne sont respectivement remis à zéro. Selon cette forme particulière de réalisation, les signaux analogiques représentatifs des charges de tous les points photosensibles de la ligne considérée sont remis à zéro avant de considérer la ligne suivante. Cette forme de réalisation est particulièrement adaptée à une période d'exposition $T_{expo}$ continue ou, tout du moins, supérieure à la durée globale de traitement des signaux issus de tous les points photosensibles. Dans la figure 7, on considère que l'étape $E_2$ d'exposition des points photosensibles est effectuée en parallèle de l'étape $E_3$ de lecture. L'enchaînement des traitements des signaux est effectué conformément à la possibilité décrite en référence à la figure 5, c'est-à-dire que la sous-étape $E_{32}$ de traitement est répétée N fois pour une même ligne avant de considérer la ligne suivante. En revanche, après les N sous-étapes $E_{32}$ de traitement des signaux de la première ligne, ceux-ci sont remis à zéro pendant une période $T_{RAZ1}$. Les signaux de la deuxième ligne sont ensuite traités N fois avant d'être remis à zéro pendant une période $T_{RAZ2}$, et ainsi de suite pour toutes les lignes de la matrice 2, 2' ou 2", jusqu'à la dernière ligne où les signaux correspondants sont traités N fois avant d'être remis à zéro pendant une période $T_{RAZNI}$. Puis les étapes $E_{35}$, $E_4$ et $E_5$ sont réalisées. Ensuite, une nouvelle image peut alors être acquise par une nouvelle étape $E_3$ de lecture où les signaux des différentes lignes sont traités successivement.

L'invention permet de réduire le bruit généré par la chaîne d'acquisition de l'image de façon simple et économique, aucune modification matérielle de la chaîne d'acquisition de l'image n'étant nécessaire. Le nombre N de traitements effectué par point photosensible peut facilement être adapté en fonction du rapport signal sur bruit souhaité et des ressources matérielles de la chaîne d'acquisition de l'image.

## Revendications

1. Procédé de commande d'un dispositif photosensible (1, 1', 1 ") comprenant une matrice (2, 2', 2") de pixels ($P_1$ à $P_9$) organisée en lignes ($L_1$ à $L_3$) et en colonnes ($Cl_1$ à $Cl_3$), le procédé comprenant

   - une étape ($E_2$) d'acquisition d'une image au cours de laquelle chaque pixel ($P_1$ à $P_9$) est susceptible d'accumuler une charge et
   - une étape ($E_3$) de lecture ligne par ligne de cette image, l'étape ($E_3$) de lecture comportant :

      - une sous-étape ($E_{31}$) de conversion des charges accumulées par chaque pixel ($P_1$ à $P_9$) de la ligne considérée en signaux analogiques représentatifs de ces charges, et
      - une sous-étape ($E_{32}$) de traitement de ces signaux analogiques, ladite sous-étape comprenant une numérisation (324) desdits signaux analogiques,

   le procédé étant **caractérisé en ce que** :

      - la sous-étape ($E_{32}$) de traitement comprend un multiplexage (322) desdits signaux analogiques de la ligne considérée pour fournir en série un signal multiplexé pour chaque sous-étape ($E_{32}$) de traitement,
      - **en ce que** la sous-étape ($E_{32}$) de traitement est exécutée N fois pour chaque ligne de pixels ($P_1$ à $P_9$) et pour une même étape ($E_2$) d'acquisition, avec N entier supérieur ou égal à deux, et
      - **en ce que** l'étape ($E_3$) de lecture comporte une sous-étape ($E_{35}$) de moyennage des N signaux traités pour chaque pixel ($P_1$ à $P_9$) afin de fournir une seule image numérique par étape ($E_2$) d'acquisition.

2. Procédé selon la revendication 1, **caractérisé en ce que** les signaux analogiques sont des tensions.

3. Procédé selon l'une quelconque des revendications 1 ou 2, **caractérisé en ce que** la sous-étape ($E_{32}$) de traitement comprend une conversion (324) des signaux analogiques (SM) en signaux numériques (SN).

4. Procédé selon l'une des revendications précédentes, **caractérisé en ce que** la sous-étape (E32) de traitement comprend un échantillonnage/blocage (321) des signaux analogiques précédant immédiatement leur multiplexage (322).

5. Procédé selon l'une des revendications précédentes, **caractérisé en ce que** la sous-étape (E32) de traitement comprend une amplification (323) des signaux analogiques ou, le cas échéant, des signaux numériques (SN).

**6.** Procédé selon l'une des revendications précédentes, **caractérisé en ce que** chaque étape (E$_2$) d'acquisition d'une image pour laquelle les pixels (P$_1$ à P$_9$) sont soumis à une exposition, appelée image utile, est précédée d'une étape (E$_2$) d'acquisition d'une image pour laquelle les pixels (P$_1$ à P$_9$) ne sont pas soumis à une exposition, appelée image d'offset, et d'une étape (E$_3$) de lecture de cette image d'offset, l'étape (E$_3$) de lecture de l'image d'offset étant identique à l'étape (E$_3$) de lecture de l'image utile, l'image utile étant corrigée en fonction de l'image d'offset.

**7.** Procédé selon l'une des revendications précédentes, **caractérisé en ce que** la sous-étape (E$_{32}$) de traitement est exécutée N fois pour une même ligne avant de considérer la ligne suivante.

**8.** Procédé selon l'une quelconque des revendications 1 à 6, **caractérisé en ce que** la sous-étape (E$_{32}$) de traitement considère chaque ligne successivement avant d'être répétée.

**9.** Procédé selon l'une des revendications précédentes, **caractérisé en ce que** les signaux analogiques représentatifs des charges de tous les pixels sont remis à zéro après les N exécutions pour chaque pixel (P$_1$ à P$_9$) de la sous-étape (E$_{32}$) de traitement.

**10.** Procédé selon la revendication 7, **caractérisé en ce que** les signaux analogiques représentatifs des charges de tous les pixels (P$_1$ à P$_9$) de la ligne considérée sont remis à zéro avant de considérer la ligne suivante.

**Patentansprüche**

**1.** Verfahren zum Steuern einer fotosensiblen Vorrichtung (1, 1', 1"), die eine Matrix (2, 2', 2") von Pixeln (P$_1$ bis P$_9$) umfasst, die in Reihen (L$_1$ bis L$_3$) und Spalten (Cl$_1$ bis Cl$_3$) organisiert sind, wobei das Verfahren Folgendes beinhaltet:

einen Schritt (E$_2$) des Erfassens eines Bildes, in dessen Verlauf jedes Pixel (P$_1$ bis P$_9$) eine Ladung akkumuliert, und
einen Schritt (E$_3$) des Lesens dieses Bildes Reihe für Reihe, wobei der Leseschritt (E$_3$) Folgendes beinhaltet:

einen Unterschritt (E$_{31}$) des Umwandelns von von jedem Pixel (P$_1$ bis P$_9$) der betrachteten Reihe akkumulierten Ladungen in Analogsignale, die für diese Ladungen repräsentativ sind, und

einen Teilschritt (E$_{32}$) des Verarbeitens dieser Analogsignale, wobei der Unterschritt eine Digitalisierung (324) der Analogsignale beinhaltet,

wobei das Verfahren **dadurch gekennzeichnet ist, dass**:

der Verarbeitungsteilschritt (E$_{32}$) eine Multiplexierung (322) der Analogsignale der betrachteten Reihe beinhaltet, um in Serie ein multiplexiertes Signal für jeden Verarbeitungsteilschritt (E$_{32}$) zu liefern,
dadurch, dass der Verarbeitungsteilschritt (E$_{32}$) N Mal für jede Reihe von Pixeln (P$_1$ bis P$_9$) und für denselben Erfassungsschritt (E$_2$) ausgeführt wird, wobei N eine ganze Zahl gleich oder größer als zwei ist, und
dadurch, dass der Leseschritt (E$_3$) einen Teilschritt (E$_{35}$) des Mittelns von N verarbeiteten Signalen für jedes Pixel (P$_1$ bis P$_9$) beinhaltet, um ein einziges digitales Bild pro Erfassungsschritt (E$_2$) zu liefern.

**2.** Verfahren nach Anspruch 1, **dadurch gekennzeichnet, dass** die Analogsignale Spannungen sind.

**3.** Verfahren nach Anspruch 1 oder 2, **dadurch gekennzeichnet, dass** der Verarbeitungsteilschritt (E$_{32}$) eine Umwandlung (324) von Analogsignalen (SM) in Digitalsignale (SN) beinhaltet.

**4.** Verfahren nach einem der vorherigen Ansprüche, **dadurch gekennzeichnet, dass** der Verarbeitungsteilschritt (E32) eine Abtastung/Sperrung (321) von Analogsignalen unmittelbar vor ihrer Multiplexierung (322) beinhaltet.

**5.** Verfahren nach einem der vorherigen Ansprüche, **dadurch gekennzeichnet, dass** der Verarbeitungsteilschritt (E32) eine Verstärkung (323) von Analogsignalen oder ggf. von Digitalsignalen (SN) beinhaltet.

**6.** Verfahren nach einem der vorherigen Ansprüche, **dadurch gekennzeichnet, dass** jedem Schritt (E$_2$) des Erfassens eines Bildes, für das die Pixel (P$_1$ bis P$_9$) belichtet werden, Nutzbild genannt, ein Schritt (E$_2$) des Erfassens eines Bildes, für das die Pixel (P$_1$ bis P$_9$) nicht belichtet werden, Offset-Bild genannt, und ein Schritt (E$_3$) des Lesens dieses Offset-Bildes vorangehen, wobei der Schritt (E$_3$) des Lesens des Offset-Bildes mit dem Schritt (E$_3$) des Lesens des Nutzbildes identisch ist, wobei das Nutzbild in Abhängigkeit von dem Offset-Bild korrigiert wird.

**7.** Verfahren nach einem der vorherigen Ansprüche, **dadurch gekennzeichnet, dass** der Verarbeitungsteilschritt ($E_{32}$) N Mal für dieselbe Reihe ausgeführt wird, bevor die nachfolgende Reihe betrachtet wird.

8. Verfahren nach einem der Ansprüche 1 bis 6, **dadurch gekennzeichnet, dass** der Verarbeitungsteilschritt ($E_{32}$) jede Reihe nacheinander vor dem Wiederholen berücksichtigt.

9. Verfahren nach einem der vorherigen Ansprüche, **dadurch gekennzeichnet, dass** die Analogsignale, die für Ladungen aller Pixel repräsentativ sind, nach den N Ausführungen für jedes Pixel ($P_1$ bis $P_9$) des Verarbeitungsteilschritts ($E_{32}$) genullt werden.

10. Verfahren nach Anspruch 7, **dadurch gekennzeichnet, dass** die Analogsignale, die für Ladungen aller Pixel ($P_1$ bis $P_9$) der betrachteten Reihe repräsentativ sind, vor dem Berücksichtigen der folgenden Reihe genullt werden.

## Claims

1. A method for controlling a photosensitive device (1, 1', 1") comprising a matrix (2, 2', 2") of pixels ($P_1$ to $P_9$) organised in rows ($L_1$ to $L_3$) and columns ($Cl_1$ to $Cl_3$), the method comprising
a step ($E_2$) of acquiring an image in the course of which each pixel ($P_1$ to $P_9$) is able to accumulate a charge and
a step ($E_3$) of reading this image row by row, the reading step ($E_3$) comprising:

   a sub-step ($E_{31}$) of converting the charges accumulated by each pixel ($P_1$ to $P_9$) of the row being considered into analogue signals representative of these charges, and
   a sub-step ($E_{32}$) of processing these analogue signals, said sub-step comprising digitisation (324) of said analogue signals,

   the method being **characterised in that**:

   the processing sub-step ($E_{32}$) comprises multiplexing (322) of said analogue signals of the row being considered so as to provide in series a multiplexed signal for each processing sub-step ($E_{32}$),
   **in that** the processing sub-step ($E_{32}$) is executed N times for each row of pixels ($P_1$ to $P_9$) and for each acquisition step ($E_2$), with N an integer greater than or equal to two, and
   **in that** the reading step ($E_3$) comprises a sub-step ($E_{35}$) of averaging the N signals processed for each pixel ($P_1$ to $P_9$) so as to provide a single digital image for each acquisition step ($E_2$).

2. The method according to Claim 1, **characterised in that** the analogue signals are voltages.

3. The method according to either of Claims 1 or 2, **characterised in that** the processing sub-step ($E_{32}$) comprises a conversion (324) of the analogue signals (SM) into digital signals (SN).

4. The method according to any of the preceding claims, **characterised in that** the processing sub-step (E32) comprises sampling/blocking (321) of the analogue signals immediately preceding their multiplexing (322).

5. The method according to any of the preceding claims, **characterised in that** the processing sub-step (E32) comprises amplification (323) of the analogue signals or, if appropriate, of the digital signals (SN).

6. The method according to any of the preceding claims, **characterised in that** each step ($E_2$) of acquiring an image for which the pixels ($P_1$ to $P_9$) are subjected to exposure, called a useful image, is preceded by a step ($E_2$) of acquiring an image for which the pixels ($P_1$ to $P_9$) are not subjected to exposure, called an offset image, and by a step ($E_3$) of reading this offset image, the step ($E_3$) of reading the offset image being identical to the step ($E_3$) of reading the useful image, the useful image being corrected as a function of the offset image.

7. The method according to any of the preceding claims, **characterised in that** the processing sub-step ($E_{32}$) is executed N times for each row before considering the next row.

8. The method according to any of Claims 1 to 6, **characterised in that** the processing sub-step ($E_{32}$) considers each row in succession before being repeated.

9. The method according to any of the preceding claims, **characterised in that** the analogue signals representative of the charges of all of the pixels are re-set to zero after the N executions for each pixel ($P_1$ to $P_9$) of the processing sub-step ($E_{32}$).

10. The method according to Claim 7, **characterised in that** the analogue signals representative of the charges of all of the pixels ($P_1$ to $P_9$) of the row being considered are re-set to zero before considering the next row.

EP 2 486 724 B1

FIG.1

FIG.2

FIG.3

EP 2 486 724 B1

**E1** — Initialisation (n = 1)

**E2** — Exposition

**E31** — Conversion charges / tensions

n+1 — **E34**

**E3**

**E32**

Echantillonnage / blocage — 321

Multiplexage — 322

SM

Amplification — 323

Numérisation — 324

SN

**E33** — n = N ?

NON

OUI

**E35** — Moyennage

**E4** — Post-traitement

**E5** — Exploitation / Affichage

# FIG.4

**FIG.5**

**FIG.6**

EP 2 486 724 B1

FIG.7

## EP 2 486 724 B1

**Documents brevets cités dans la description**

- FR 8614058
- FR 2605166
- FR 2625593
- EP 1874040 A
- US 5946033 A
- FR 2760585